(19) Europäisches Patentamt

European Patent Office

Office européen des brevets

(11) **EP 0 994 629 A1**

(12) **EUROPEAN PATENT APPLICATION**

(43) Date of publication:
**19.04.2000 Bulletin 2000/16**

(51) Int. Cl.⁷: **H04N 9/04**

(21) Application number: **99118474.8**

(22) Date of filing: **17.09.1999**

(84) Designated Contracting States:
**AT BE CH CY DE DK ES FI FR GB GR IE IT LI LU MC NL PT SE**
Designated Extension States:
**AL LT LV MK RO SI**

(30) Priority: **13.10.1998 IT VE980039**

(71) Applicant:
**O.M.S. - S.p.A. Officine Meccaniche Specializzate**
**35030 Caselle di Selvazzano (IT)**

(72) Inventors:
• **Sordina, Giuseppe,**
  c/o O.M.S. S.p.A.
  **35030 Caselle di Selvazzano (IT)**
• **Vilmart, Roland,**
  c/o O.M.S. S.p.A.
  **35030 Caselle di Selvazzano (IT)**

(74) Representative: **Piovesana, Paolo**
  **Corso del Popolo, 70**
  **30172 Venezia-Mestre (IT)**

(54) **Method for high-quality image acquisition and device for implementing the method**

(57)    A high quality image acquisition method, characterised by:

- acquiring the image with a colour CCD controlled by its own electronic control system and by a monochromatic acquisition card able to provide an analog signal representative of the grey level of the CCD pixel and completed by the synchronizing signals,
- converting said analog signal into a digital signal,
- constructing a matrix in which the elements correspond to the CCD pixel distribution and are characterised by a value corresponding to the grey level of the relative pixel,

- constructing from said matrix, by calculation, three matrices of identical dimensions corresponding to the three basic colour components, each element of each of said three matrices being characterised by a value corresponding to the level of that colour component and obtained using the grey level information of the corresponding element of the starting matrix, and of the adjacent elements,
- reconstructing the original image with said three matrices.

FIG. 1

**Description**

This invention relates to a method for high-quality image acquisition and a device for implementing the method.

Image acquisition devices are known comprising:

-     a CCD sensor with relative electronic control system coupled to an acquisition card and able to convert an optical image into an analog signal corresponding to the integrated energy levels from the various CCD pixels during the exposure time, and to associate synchronizing signals with it,
-     an analog/digital converter to convert the output signal of the CCD acquisition card into a digital signal,
-     an electronic coordination system, and
-     an image visualization device in the form of a display device, a printer etc..

These known acquisition devices are therefore able to read an optical image, convert it into a digital signal and then reconstruct it from said digital signal for its reproduction or for storage in the case of later use.

Colour image acquisition devices and black and white image acquisition devices exists.

A known type of colour image acquisition device comprises a CCD provided with colour filters arranged as a suitable frame. The electronic acquisition card processes the information received by the CCD and provides an image in accordance with the colour standards used.

When these known devices are used for high quality and high flexibility applications, they present considerable problems, and in particular:

-     the information relative to the colour is the result of the treatment effected by the acquisition card, which provides the colour image components but without any access to the real information source, namely the CCD pixels,
-     most CCDs operate in field integration mode, in the sense that each image is divided into two fields, one consisting of the even lines, the other of the odd lines The two fields are exposed in sequence, with a 20 ms interval between one and the next. Consequently the two fields are not exposed to the same image for any of the moving images, this causing a fluctuation effect and colour alteration,
-     the CCD electronic control system causes distortion of the original signal and strong attenuation of the pass-band, which negatively influences colour definition and resolution,
-     image acquisition requires a colour acquisition card, which is somewhat complex and of high cost,
-     image treatment requires treatment of its three colour components, requiring considerable memory capacity and lengthy process times,
-     memorizing these images with their original definition requires a capacity three times that for an image originating from a black and white CCD memorized with its grey levels.

An object of the invention is to eliminate these drawbacks by acquiring images of high yield and quality by an electronic system much simpler and less costly than that required by those devices currently able to offer similar performance.

A further object of the invention is to be able to acquire colour or black and white images at choice with a single type of CCD sensor.

These and further objects which will be apparent from the ensuing description are attained according to the invention by a high quality image acquisition method, as described in claim 1.

A device for implementing the method is also disclosed as claimed in claim 8.

A preferred embodiment of the invention and a variant thereof are decribed in detail hereinafter with reference to the accompanying drawings, on which:

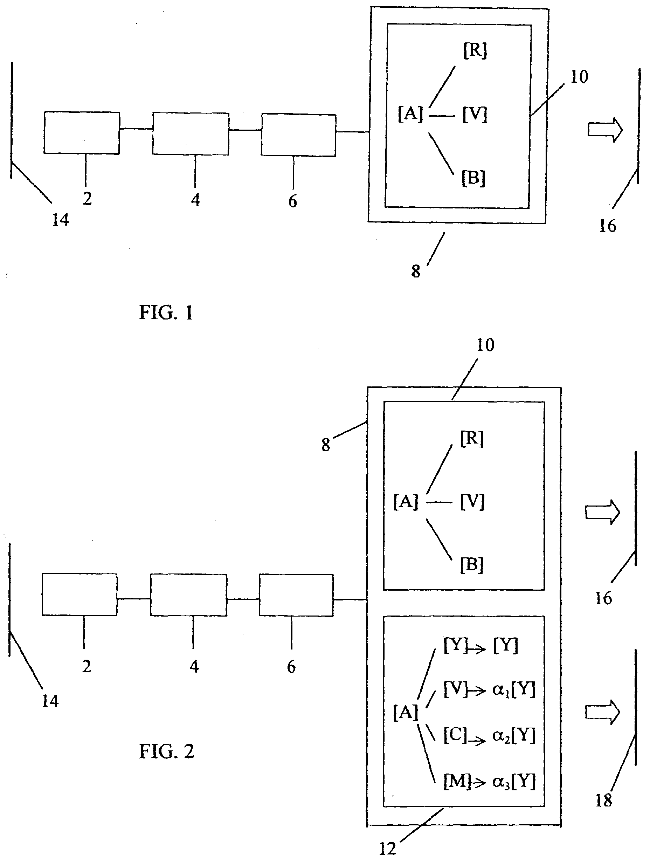

Figure 1     is a block diagram illustrating the colour image acquisition method of the invention, and
Figure 2     is a block diagram illustrating the monochromatic image acquisition method of the invention.

As can be seen from the figures the method of the invention uses an apparatus essentially comprising a CCD sensor 2 of colour filter type, preferably filter type, provided with its own electronic control system and associated with a monochromatic acquisition card 4, which is connected to an A/D converter 6 able to provide as output a digitized monochromatic video signal of CCIR type.

The output of the converter 6 is connected to a microprocessor 8 which by using a suitable algorithm transforms the digitized monochromatic video signal into a colour image or, by using a different algorithm, transforms this signal into a high yield monochromatic image, as will be apparent from the description of operation.

To better understand the method of the invention and the operation of the device using it, it is convenient to consider separately the two cases of colour image acquisition and reconstruction and monochromatic image acquisition and reconstruction, using the same CCD 2 with mosaic filter, the same monochromatic acquisition card 4 and the same A/D converter 6 but different algorithms for transforming the digitized monochromatic video signal into a colour image or into a monochromatic image. For reasons of representational clarity, on the drawings the microprocessor is indicated by 8, those parts of the microprocessor 8 which use the algorithm to reconstruct the colour image are indicated by 10 and those parts of the microprocessor 8 which use the algorithm to reconstruct the monochromatic image are indicated by 12.

Colour image

In this case the colour image 14, which is sensed by the CCD 1, and which can consist of an endoscopic image from filming the oral cavity, etc., is acquired by the electronic system associated with the CCD during one and the same time interval (full frame integration), and transformed into a monochromatic signal, which is then completed by the synchronizing page and line signals and is associated with a pixel-clock signal, to identify in the video signal the value of each pixel of the image. In order to correctly identify the signal of each pixel and correctly synchronize the pixel-clock on the central values of the pixel when these enter the acquisition card, the CCD electronic control system has a pass-band higher than the CCIR standard.

At the same time, in order to conveniently convert the video signal reaching the acquisition card 4, this must have a pass-band at least double that of the electronic control system of the CCD 2.

In the microprocessor 8, by using a suitable algorithm a matrix is constructed in which each element corresponds to one pixel of the CCD and is defined by its coordinates (row and column) and by a digital item of data (grey level) corresponding to the light energy received by the pixel during the time of exposure of the colour image to be acquired.

From this matrix the microprocessor 8, using another suitable algorithm, constructs three matrices of the three basic colour components (R, V, B). More specifically, for each element of each matrix this algorithm determines the colour component (red, violet or blue) using the grey level information for the element considered and the adjacent elements.

Various algorithms can be used to obtain the three matrices [R],[V] and [B], and these can differ from each other depending on the CCD used and depending, for the same CCD, on the requirements (calculation speed, colour fidelity, contrast, etc.). Different algorithms can be provided for this, depending on the circumstances, and the computer can use the most suitable one, based on the given instructions, to solve the particular problem.

Specifically, if $[A]_{m,p}$ indicates that matrix the elements $A_{m,p}$ of which are characterised by the grey level value of the pixel of coordinates m (column) and p (row), an algorithm which from the matrix $[A]_{m,p}$ enable the three matrices $[R]_{m,p}$ of the basic red component (R) of the colour, $[V]_{m,p}$ of the basic green component (V) of the colour and $[B]_{m,p}$ of the basic blue component (B) of the colour to be obtained could be the following, obtained as a result of studying the spectral response curves of the yellow, azure, magenta and green pixel filters:

$$\begin{vmatrix} R_{4p,2n} & = A_{4p,2n} & + A_{4p+1,2n} & - A_{4p,2n+1} & - A_{4p+1,2n+1} \\ R_{4p,2n+1} & = A_{4p,2n+2} & + A_{4p+1,2n+2} & - A_{4p,2n+1} & - A_{4p+1,2n+1} \\ R_{4p+1,2n} & = A_{4p+2,2n} & + A_{4p+1,2n} & - A_{4p+2,2n+1} & - A_{4p+1,2n+1} \\ R_{4p+1,2n+1} & = A_{4p+2,2n+2} & + A_{4p+1,2n+2} & - A_{4p+2,2n+1} & - A_{4p+1,2n+1} \\ R_{4p+2,2n} & = A_{4p+2,2n} & + A_{4p+3,2n+1} & - A_{4p+2,2n+1} & - A_{4p+3,2n} \\ R_{4p+2,2n+1} & = A_{4p+2,2n+2} & + A_{4p+3,2n+1} & - A_{4p+2,2n+1} & - A_{4p+3,2n+2} \end{vmatrix} \quad (1)$$

$$
\begin{aligned}
R_{4p+3,2n} &= A_{4p+4,2n} + A_{4p+3,2n+1} - A_{4p+4,2n+1} - A_{4p+3,2n} \\
R_{4p+3,2n+1} &= A_{4p+4,2n+2} + A_{4p+3,2n+1} - A_{4p+4,2n+1} - A_{4p+3,2n+2}
\end{aligned}
$$

$$
\begin{aligned}
V_{4p,2n} &= A_{4p,2n} + A_{4p,2n+1} - A_{4p+1,2n+1} - A_{4p+1,2n} \\
V_{4p,2n+1} &= A_{4p,2n+2} + A_{4p,2n+1} - A_{4p+1,2n+1} - A_{4p+1,2n+2} \\
V_{4p+1,2n} &= A_{4p+2,2n} + A_{4p+2,2n+1} - A_{4p+1,2n+1} - A_{4p+1,2n} \\
V_{4p+1,2n+1} &= A_{4p,2n+2} + A_{4p,2n+1} - A_{4p+1,2n+1} - A_{4p+1,2n+2} \\
V_{4p+2,2n} &= A_{4p+2,2n} + A_{4p+2,2n+1} - A_{4p+3,2n} - A_{4p+3,2n+1} \\
V_{4p+2,2n+1} &= A_{4p+2,2n+2} + A_{4p+2,2n+1} - A_{4p+3,2n+2} - A_{4p+3,2n+1} \\
V_{4p+3,2n} &= A_{4p+4,2n} + A_{4p+4,2n+1} - A_{4p+3,2n+2} - A_{4p+3,2n+1} \\
V_{4p+3,2n+1} &= A_{4p+4,2n+2} + A_{4p+4,2n+1} - A_{4p+3,2n+2} - A_{4p+3,2n+1}
\end{aligned}
\tag{2}
$$

$$
\begin{aligned}
B_{4p,2n} &= A_{4p,2n+1} + A_{4p+1,2n} - A_{4p+1,2n+1} - A_{4p,2n} \\
B_{4p,2n+1} &= A_{4p,2n+1} + A_{4p+1,2n+2} - A_{4p+1,2n+1} - A_{4p,2n+2} \\
B_{4p+1,2n} &= A_{4p+2,2n+1} + A_{4p+1,2n} - A_{4p+1,2n+1} - A_{4p+2,2n} \\
B_{4p+1,2n+1} &= A_{4p+2,2n+1} + A_{4p+1,2n+2} - A_{4p+1,2n+1} - A_{4p+2,2n+2} \\
B_{4p+2,2n} &= A_{4p+2,2n+1} + A_{4p+3,2n} - A_{4p+3,2n} - A_{4p+2,2n} \\
B_{4p+2,2n+1} &= A_{4p+2,2n+1} + A_{4p+3,2n+1} - A_{4p+3,2n+2} - A_{4p+2,2n+2} \\
B_{4p+3,2n} &= A_{4p+4,2n+1} + A_{4p+3,2n+1} - A_{4p+3,2n} - A_{4p+4,2n} \\
B_{4p+3,2n+1} &= A_{4p+4,2n+1} + A_{4p+3,2n+1} - A_{4p+3,2n+2} - A_{4p+4,2n+2}
\end{aligned}
\tag{3}
$$

After this procedure, from the grey level matrix [A] three matrices [R], [V], [B] are obtained of the same dimensions, each element of which contains the level of the relative basic colour component of the element corresponding to that of the monochromatic matrix [A], which in its turn corresponds to the CCD pixels.

The three matrices of the three basic colour components can then be used to reconstruct the colour image in traditional manner, for its direct use (display or printer) or later use (memory).

As the colour image obtained in this manner can be influenced by the environmental lighting conditions it is expedient to preset the device (white balancing). This operation involves making the CCD 2 acquire the image of a white sheet, for which all the points must have a constant equal red, green and blue component, starting from the known values of the Y (yellow), C (azure), M (magenta) and V (green) filters which form the mosaic filter.

Indicating by $[R_f]$, $[V_f]$, $[B_f]$ the corrected values of [R], [V], [B] obtained from formulas 1), 2) and 3) in all these formulas there is an expression of type $(a+b)-(c+b)$, in which a,b,c, d are the pixel values, which can be adjusted by coefficients, in accordance with the expressions:

$$R_f = \beta_1 (a_r + b_r) - \delta_1 (c_r + d_r) = \text{constant}$$

$$V_f = \beta_2 (a_v + b_v) - \delta_2 (c_v + d_v) = \text{constant}$$

$$B_f = \beta_3 (a_b + b_b) - \delta_3 (c_b + d_b) = \text{constant}$$

Putting $\delta_1 = \delta_2 = \delta_3 = 1$ for ease of operation and to conserve the full value of the terms c+d, one obtains:

$$\beta_1 = (\text{constant} + c_r + d_r)/(a_r + b_r)$$

$$\beta_2 = (\text{constant} + c_v + d_v)/(a_v + b_v)$$

$$\beta_3 = (\text{constant} + c_b + d_b)/(a_b + b_b)$$

Hence using these correction coefficients the formulas 1), 2) and 3) become the following formulas 4), 5) and 6):

$$
\begin{aligned}
R_{4p,2n} &= \beta_1 . A_{4p,2n} + \beta_1 . A_{4p+1,2n} - A_{4p,2n+1} - A_{4p+1,2n+1} \\
R_{4p,2n+1} &= \beta_1 . A_{4p,2n+2} + \beta_1 . A_{4p+1,2n+2} - A_{4p,2n+1} - A_{4p+1,2n+1} \\
R_{4p+1,2n} &= \beta_1 . A_{4p+2,2n} + \beta_1 . A_{4p+1,2n} - A_{4p+2,2n+1} - A_{4p+1,2n+1} \\
R_{4p+1,2n+1} &= \beta_1 . A_{4p+2,2n+2} + \beta_1 . A_{4p+1,2n+2} - A_{4p+2,2n+1} - A_{4p+1,2n+1} \\
R_{4p+2,2n} &= \beta_1 . A_{4p+2,2n} + \beta_1 . A_{4p+3,2n+1} - A_{4p+2,2n+1} - A_{4p+3,2n} \\
R_{4p+2,2n+1} &= \beta_1 . A_{4p+2,2n+2} + \beta_1 . A_{4p+3,2n+1} - A_{4p+2,2n+1} - A_{4p+3,2n+2} \\
R_{4p+3,2n} &= \beta_1 . A_{4p+4,2n} + \beta_1 . A_{4p+3,2n+1} - A_{4p+4,2n+1} - A_{4p+3,2n} \\
R_{4p+3,2n+1} &= \beta_1 . A_{4p+4,2n+2} + \beta_1 . A_{4p+3,2n+1} - A_{4p+4,2n+1} - A_{4p+3,2n+2}
\end{aligned}
\tag{4}
$$

$$
\begin{aligned}
V_{4p,2n} &= \beta_2 . A_{4p,2n} + \beta_2 . A_{4p,2n+1} - A_{4p+1,2n+1} - A_{4p+1,2n} \\
V_{4p,2n+1} &= \beta_2 . A_{4p,2n+2} + \beta_2 . A_{4p,2n+1} - A_{4p+1,2n+1} - A_{4p+1,2n+2} \\
V_{4p+1,2n} &= \beta_2 . A_{4p+2,2n} + \beta_2 . A_{4p+2,2n+1} - A_{4p+1,2n+1} - A_{4p+1,2n} \\
V_{4p+1,2n+1} &= \beta_2 . A_{4p,2n+2} + \beta_2 . A_{4p,2n+1} - A_{4p+1,2n+1} - A_{4p+1,2n+2} \\
V_{4p+2,2n} &= \beta_2 . A_{4p+2,2n} + \beta_2 . A_{4p+2,2n+1} - A_{4p+3,2n} - A_{4p+3,2n+1} \\
V_{4p+2,2n+1} &= \beta_2 . A_{4p+2,2n+2} + \beta_2 . A_{4p+2,2n+1} - A_{4p+3,2n+2} - A_{4p+3,2n+1} \\
V_{4p+3,2n} &= \beta_2 . A_{4p+4,2n} + \beta_2 . A_{4p+4,2n+1} - A_{4p+3,2n} - A_{4p+3,2n+1} \\
V_{4p+3,2n+1} &= \beta_2 . A_{4p+4,2n+2} + \beta_2 . A_{4p+4,2n+1} - A_{4p+3,2n+2} - A_{4p+3,2n+1}
\end{aligned}
\tag{5}
$$

$$
\begin{aligned}
B_{4p,2n} &= \beta_3 . A_{4p,2n+1} + \beta_3 . A_{4p+1,2n} - A_{4p+1,2n+1} - A_{4p,2n} \\
B_{4p,2n+1} &= \beta_3 . A_{4p,2n+1} + \beta_3 . A_{4p+1,2n+2} - A_{4p+1,2n+1} - A_{4p,2n+2} \\
B_{4p+1,2n} &= \beta_3 . A_{4p+2,2n+1} + \beta_3 . A_{4p+1,2n} - A_{4p+1,2n+1} - A_{4p+2,2n} \\
B_{4p+1,2n+1} &= \beta_3 . A_{4p+2,2n+1} + \beta_3 . A_{4p+1,2n+2} - A_{4p+1,2n+1} - A_{4p+2,2n+2} \\
B_{4p+2,2n} &= \beta_3 . A_{4p+2,2n+1} + \beta_3 . A_{4p+3,2n} - A_{4p+3,2n} - A_{4p+2,2n} \\
B_{4p+2,2n+1} &= \beta_3 . A_{4p+2,2n+1} + \beta_3 . A_{4p+3,2n+1} - A_{4p+3,2n+2} - A_{4p+2,2n+2}
\end{aligned}
\tag{6}
$$

$$B_{4p+3,2n} = \beta_3 \cdot A_{4p+4,2n+1} + \beta_3 \cdot A_{4p+3,2n+1} - A_{4p+3,2n} - A_{4p+4,2n}$$

$$B_{4p+3,2n+1} = \beta_3 \cdot A_{4p+4,2n+1} + \beta_3 \cdot A_{4p+3,2n+1} - A_{4p+3,2n+2} - A_{4p+4,2n+2}$$

It is clear that the aforedescribed method and the device for its implementation are particularly advantageous, and in particular use a monochromatic acquisition card, which is of much lower cost than a colour acquisition card. Moreover, image acquisition takes place for all the CCD pixels within the same time interval, with evident advantage both in terms of image stability, even if in movement, and in term of colour yield.

Monochromatic image

The microprocessor of the invention, using a monochromatic image acquisition card and achieving a whole series of advantages over a colour acquisition card without losing performance, also enables monochromatic images to be acquired with the same yield as that obtainable with a monochromatic CCD, and hence much better than that obtainable with a colour CCD.

In this respect, the acquisition of a monochromatic image is required in very many cases, for example in radiography. In these cases either a separate acquisition device for monochromatic images is used, which means that this separate device has to be provided, or a colour image acquisition device is used, in which case the presence of the filter in the CCD results in considerable image attenuation and alteration.

According to the invention a device of the aforedescribed type using for colour image acquisition a colour CCD with its own control logic and with a monochromatic image acquisition card can be advantageously and effectively used to acquire monochromatic images by using a different algorithm for processing the digitized monochromatic video signal.

Again in this case, as in the preceding, the algorithm can differ according to the CCD used and to the performance required.

In one particular usable algorithm, the matrix [A], the elements of which carry the grey level information of the corresponding pixels, is transformed into four matrices [Y], [V], [C], [M] each of which has the same format as the matrix [A] but contains only the elements of a particular colour of the mosaic filter. In practice, using for example a matrix multiplication operation, the four colour components Y, V, C, M are extracted from the matrix A and these are used to form tour matrices in which the various elements carry only a value corresponding to one of the four colour components of the filter, whereas those elements which do not present a component of that colour carry zero value.

That of the four matrices [Y], [V], [C], [M] which corresponds to the most intense image is then chosen. This can be done for example by comparing the sums of the pixel values of the four matrices, or the mean value of the pixels of the four matrices.

Having identified this dominant colour matrix, the other three matrices are transformed into new matrices in which, by knowing the ratio $(a_i)$ of the attenuation values of the various colours (for example obtained as the ratio of the mean pixel value of that colour to the mean pixel value of the dominant colour), the various elements are expressed in the dominant colour.

If for example the chosen dominant colour is yellow (Y) and $\alpha_1$, $\alpha_2$, $\alpha_3$ are the attenuation ratios of the three colours green (V), azure (C) and magenta (M) to yellow, ie:

$$\alpha_1 = \frac{V}{Y} \; ; \; \alpha_2 = \frac{C}{Y} \text{ and } \alpha_3 = \frac{M}{Y},$$

the three matrices [V], [C] and [M] can be expressed a function of the matrix [Y] and of the three attenuation ratios $\alpha_1$, $\alpha_2$ and $\alpha_3$ by the expressions:

$$[V] = \alpha_1 [Y]$$

$$[C] = \alpha_2 [Y]$$

$$[M] = \alpha_3 [Y]$$

Having obtained four matrices the elements of which express the energy of the various CCD pixels in the dominant image colour (Y), the monochromatic image 18 representative of the starting image can then be constructed.

It will be apparent that in this case the monochromatic starting image is acquired and reproduced with a high yield, without doubt higher than that with which a monochromatic image would be acquired by a colour CCD.

**Claims**

1. A high quality image acquisition method, characterised by:

   - acquiring the image with a colour CCD controlled by its own electronic control system and by a monochromatic acquisition card able to provide an analog signal representative of the grey level of the CCD pixel and completed by the synchronizing signals,
   - converting said analog signal into a digital signal,
   - constructing a matrix in which the elements correspond to the CCD pixel distribution and are characterised by a value corresponding to the grey level of the relative pixel,
   - constructing from said matrix, by calculation, three matrices of identical dimensions corresponding to the three basic colour components, each element of each of said three matrices being characterised by a value corresponding to the level of that colour component and obtained using the grey level information of the corresponding element of the starting matrix, and of the adjacent elements,
   - reconstructing the original image with said three matrices.

2. A method as claimed in claim 1, characterised by using the following algorithm to transform the monochromatic matrix (A) into the three matrices (R,V,B) of the three basic colour components:

$$
\left|
\begin{aligned}
R_{4p,2n} &= A_{4p,2n} + A_{4p+1,2n} - A_{4p,2n+1} - A_{4p+1,2n+1} \\
R_{4p,2n+1} &= A_{4p,2n+2} + A_{4p+1,2n+2} - A_{4p,2n+1} - A_{4p+1,2n+1} \\
R_{4p+1,2n} &= A_{4p+2,2n} + A_{4p+1,2n} - A_{4p+2,2n+1} - A_{4p+1,2n+1} \\
R_{4p+1,2n+1} &= A_{4p+2,2n+2} + A_{4p+1,2n+2} - A_{4p+2,2n+1} - A_{4p+1,2n+1} \\
R_{4p+2,2n} &= A_{4p+2,2n} + A_{4p+3,2n+1} - A_{4p+2,2n+1} - A_{4p+3,2n}
\end{aligned}
\right| (1)
$$

$$R_{4p+2,2n+1} = A_{4p+2,2n+2} + A_{4p+3,2n+1} - A_{4p+2,2n+1} - A_{4p+3,2n+2}$$

$$R_{4p+3,2n} = A_{4p+4,2n} + A_{4p+3,2n+1} - A_{4p+4,2n+1} - A_{4p+3,2n}$$

$$R_{4p+3,2n+1} = A_{4p+4,2n+2} + A_{4p+3,2n+1} - A_{4p+4,2n+1} - A_{4p+3,2n+2}$$

$$V_{4p,2n} = A_{4p,2n} + A_{4p,2n+1} - A_{4p+1,2n+1} - A_{4p+1,2n}$$

$$V_{4p,2n+1} = A_{4p,2n+2} + A_{4p,2n+1} - A_{4p+1,2n+1} - A_{4p+1,2n+2}$$

$$V_{4p+1,2n} = A_{4p+2,2n} + A_{4p+2,2n+1} - A_{4p+1,2n+1} - A_{4p+1,2n}$$

$$V_{4p+1,2n+1} = A_{4p,2n+2} + A_{4p,2n+1} - A_{4p+1,2n+1} - A_{4p+1,2n+2} \qquad (2)$$

$$V_{4p+2,2n} = A_{4p+2,2n} + A_{4p+2,2n+1} - A_{4p+3,2n} - A_{4p+3,2n+1}$$

$$V_{4p+2,2n+1} = A_{4p+2,2n+2} + A_{4p+2,2n+1} - A_{4p+3,2n+2} - A_{4p+3,2n+1}$$

$$V_{4p+3,2n} = A_{4p+4,2n} + A_{4p+4,2n+1} - A_{4p+3,2n+2} - A_{4p+3,2n+1}$$

$$V_{4p+3,2n+1} = A_{4p+4,2n+2} + A_{4p+4,2n+1} - A_{4p+3,2n+2} - A_{4p+3,2n+1}$$

$$B_{4p,2n} = A_{4p,2n+1} + A_{4p+1,2n} - A_{4p+1,2n+1} - A_{4p,2n}$$

$$B_{4p,2n+1} = A_{4p,2n+1} + A_{4p+1,2n+2} - A_{4p+1,2n+1} - A_{4p,2n+2}$$

$$B_{4p+1,2n} = A_{4p+2,2n+1} + A_{4p+1,2n} - A_{4p+1,2n+1} - A_{4p+2,2n}$$

$$B_{4p+1,2n+1} = A_{4p+2,2n+1} + A_{4p+1,2n+2} - A_{4p+1,2n+1} - A_{4p+2,2n+2} \qquad (3)$$

$$B_{4p+2,2n} = A_{4p+2,2n+1} + A_{4p+3,2n} - A_{4p+3,2n} - A_{4p+2,2n}$$

$$B_{4p+2,2n+1} = A_{4p+2,2n+1} + A_{4p+3,2n+1} - A_{4p+3,2n+2} - A_{4p+2,2n+2}$$

$$B_{4p+3,2n} = A_{4p+4,2n+1} + A_{4p+3,2n+1} - A_{4p+3,2n} - A_{4p+4,2n}$$

$$B_{4p+3,2n+1} = A_{4p+4,2n+1} + A_{4p+3,2n+1} - A_{4p+3,2n+2} - A_{4p+4,2n+2}$$

in which $X_{mp}$ is the element of coordinates m and p of each of the matrices (A, R, V, B).

3. A method as claimed in claim 1, characterised by periodically balancing the white by modifying the value of the elements ($R_{mp}$, $V_{mp}$, $B_{mp}$) of the three matrices (R, V, B) by means of correction coefficients ($\beta_1$, $\beta_2$, $\beta_3$,) obtained by acquiring an image of known characteristics.

4. A method as claimed in claim 3, characterised by causing the CCD to acquire an image of a white sheet and determining the correction coefficients ($\beta_1$, $\beta_2$, $\beta_3$) for this image using the expressions

$$\beta_1 = (constant + c_r + d_r)/(a_r + b_r)$$

$$\beta_2 = (constant + c_v + d_v)/(a_v + b_v)$$

$$\beta_3 = (constant + c_b + d_b)/(a_b + b_b)$$

**5.** A method as claimed in claim 1 for acquiring monochromatic image, characterised by:

- acquiring images with a colour CCD controlled by its own electronic control system and by a monochromatic acquisition card, to obtain an analog signal representative of the grey level of the CCD pixels and completed by the synchronizing signals,
- converting said analog signal into a digital signal,
- by calculation, constructing a matrix in which the elements correspond to the CCD pixel distribution and are characterised by a value corresponding to the grey level of each of these,
- from said matrix, constructing by calculation four matrices of identical dimensions, in which each element is characterised by the value only of the component of one of the four colours (Y, V, C, M) of the CCD filter,
- choosing that matrix corresponding to the most intense image,
- converting the other three matrices into three matrices in which the value associated with each element is expressed by the value associated with the corresponding element of the chosen matrix and by the attenuation ratio of the intensity of each of said three matrices to that of the chosen matrix,
- reconstructing the original monochromatic image from said four matrices.

**6.** A method as claimed in claim 5, characterised in that the matrix corresponding to the most intense image is chosen by comparing the sums of the pixel value of the four matrices (Y, V, C, M).

**7.** A method as claimed in claim 5, characterised in that the matrix corresponding to the most intense image is chosen by comparing the mean values of the pixel values of the four matrices (Y, V, C, M).

**8.** A device for implementing the method claimed in one or more of claims 1 to 7, characterised by comprising:

- a colour CCD sensor (2) with its own electronic control system and with a monochromatic acquisition card (4) for the image (14) acquired by said CCD (2),
- an analog/digital converter (6) for the monochromatic video signal generated by said card (4),
- first means for creating with said digitized signal a matrix (A) in which the elements correspond to the pixel distribution of said CCD (2) and are characterised by a value corresponding to the grey level of the relative pixels,
- second means for transforming said matrix (A) into three matrices (R, V, B) of identical dimensions corresponding to the three basic colour components, their elements being characterised by a value corresponding to the level of that colour component and obtained using the grey level information of the corresponding element of the starting matrix, and of the adjacent elements,
- third means for reconstructing the original image from said three matrices (R, V, B).

**9.** A device as claimed in claim 6, characterised in that said second means consists of an algorithm of type:

$$R_{4p,2n} = A_{4p,2n} + A_{4p+1,2n} - A_{4p,2n+1} - A_{4p+1,2n+1}$$

$$R_{4p,2n+1} = A_{4p,2n+2} + A_{4p+1,2n+2} - A_{4p,2n+1} - A_{4p+1,2n+1}$$

$$R_{4p+1,2n} = A_{4p+2,2n} + A_{4p+1,2n} - A_{4p+2,2n+1} - A_{4p+1,2n+1}$$

$$R_{4p+1,2n+1} = A_{4p+2,2n+2} + A_{4p+1,2n+2} - A_{4p+2,2n+1} - A_{4p+1,2n+1}$$

$$R_{4p+2,2n} = A_{4p+2,2n} + A_{4p+3,2n+1} - A_{4p+2,2n+1} - A_{4p+3,2n} \qquad (1)$$

$$R_{4p+2,2n+1} = A_{4p+2,2n+2} + A_{4p+3,2n+1} - A_{4p+2,2n+1} - A_{4p+3,2n+2}$$

$$R_{4p+3,2n} = A_{4p+4,2n} + A_{4p+3,2n+1} - A_{4p+4,2n+1} - A_{4p+3,2n}$$

$$R_{4p+3,2n+1} = A_{4p+4,2n+2} + A_{4p+3,2n+1} - A_{4p+4,2n+1} - A_{4p+3,2n+2}$$

$$V_{4p,2n} = A_{4p,2n} + A_{4p,2n+1} - A_{4p+1,2n+1} - A_{4p+1,2n}$$

$$V_{4p,2n+1} = A_{4p,2n+2} + A_{4p,2n+1} - A_{4p+1,2n+1} - A_{4p+1,2n+2}$$

$$V_{4p+1,2n} = A_{4p+2,2n} + A_{4p+2,2n+1} - A_{4p+1,2n+1} - A_{4p+1,2n}$$

$$V_{4p+1,2n+1} = A_{4p,2n+2} + A_{4p,2n+1} - A_{4p+1,2n+1} - A_{4p+1,2n+2} \qquad (2)$$

$$V_{4p+2,2n} = A_{4p+2,2n} + A_{4p+2,2n+1} - A_{4p+3,2n} - A_{4p+3,2n+1}$$

$$V_{4p+2,2n+1} = A_{4p+2,2n+2} + A_{4p+2,2n+1} - A_{4p+3,2n+2} - A_{4p+3,2n+1}$$

$$V_{4p+3,2n} = A_{4p+4,2n} + A_{4p+4,2n+1} - A_{4p+3,2n+2} - A_{4p+3,2n+1}$$

$$V_{4p+3,2n+1} = A_{4p+4,2n+2} + A_{4p+4,2n+1} - A_{4p+3,2n+2} - A_{4p+3,2n+1}$$

$$B_{4p,2n} = A_{4p,2n+1} + A_{4p+1,2n} - A_{4p+1,2n+1} - A_{4p,2n}$$

$$B_{4p,2n+1} = A_{4p,2n+1} + A_{4p+1,2n+2} - A_{4p+1,2n+1} - A_{4p,2n+2}$$

$$B_{4p+1,2n} = A_{4p+2,2n+1} + A_{4p+1,2n} - A_{4p+1,2n+1} - A_{4p+2,2n}$$

$$B_{4p+1,2n+1} = A_{4p+2,2n+1} + A_{4p+1,2n+2} - A_{4p+1,2n+1} - A_{4p+2,2n+2} \qquad (3)$$

$$B_{4p+2,2n} = A_{4p+2,2n+1} + A_{4p+3,2n} - A_{4p+3,2n} - A_{4p+2,2n}$$

$$\left| \begin{aligned} B_{4p+2,2n+1} &= A_{4p+2,2n+1} + A_{4p+3,2n+1} - A_{4p+3,2n+2} - A_{4p+2,2n+2} \\ B_{4p+3,2n} &= A_{4p+4,2n+1} + A_{4p+3,2n+1} - A_{4p+3,2n} - A_{4p+4,2n} \\ B_{4p+3,2n+1} &= A_{4p+4,2n+1} + A_{4p+3,2n+1} - A_{4p+3,2n+2} - A_{4p+4,2n+2} \end{aligned} \right|$$

in which $X_{mp}$ is the element of coordinates (m,p) of each of the matrices (A, R, V, B).

**10.** A device for implementing the method of claim 5, characterised by comprising:

- a colour CCD sensor (2) with its own electronic control system and with a monochromatic acquisition card (4) for the image (14) acquired by said CCD (2),
- an analog/digital converter (6) for the monochromatic video signal generated by said card (4),
- first means for creating with said digitized signal a matrix (A) in which the elements correspond to the pixel distribution of said CCD (2) and are characterised by a value corresponding to the grey level of the relative pixels,
- second means for transforming said matrix (A) into three matrices (R, V, B) of identical dimensions, in which each element is characterised by the value only of the component of one of the four colours of the CCD filter,
- third means for determining that matrix corresponding to the most intense image,
- fourth means for converting the other three matrices into three matrices in which the value associated with each element is expressed by the value associated with the corresponding element of the chosen matrix and by the attenuation ratio ($\alpha_i$) of the intensity of the image associated with each of said three matrices to that associated with the chosen matrix,
- fifth means for reconstructing the original monochromatic image from said four matrices.

[R]

[A] — [V]

[B]

10

2        4        6

14

8

FIG. 1

16

10

8

[R]

[A] — [V]

[B]

16

2        4        6

14

[Y] $\rightarrow$ [Y]

[V] $\rightarrow$ $\alpha_1$[Y]

[A]

[C] $\rightarrow$ $\alpha_2$[Y]

[M] $\rightarrow$ $\alpha_3$[Y]

FIG. 2

18

12

**European Patent Office**

**EUROPEAN SEARCH REPORT**

Application Number

EP 99 11 8474

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 5 726 707 A (ASADA KOUJI ET AL) 10 March 1998 (1998-03-10) * column 14, line 18 - line 45; figure 24 * | 1,8 | H04N9/04 |
| X | US 5 719 624 A (SASAKI TAKASHI ET AL) 17 February 1998 (1998-02-17) * column 1, line 66 - column 2, line 3 * * column 10, line 54 - line 59; figures 3,16 * | 1,8 | |
| A | | 5,10 | |
| X | US 5 745 171 A (AOKI HARUMI ET AL) 28 April 1998 (1998-04-28) * column 3, line 8 - line 34 * | 1,8 | |

TECHNICAL FIELDS SEARCHED (Int.Cl.7)

H04N
G09G

The present search report has been drawn up for all claims

| Place of search | Date of completion of the search | Examiner |
|---|---|---|
| THE HAGUE | 26 January 2000 | Bequet, T |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document